# EUROPEAN PATENT APPLICATION

(11) **EP 3 753 412 A1**
(43) Date of publication of application: **23.12.2020**
(21) Application number: 20181028.0
(22) Date of filing: 19.06.2020
(51) Int. Cl.: A21B 3/04, H05B 6/02

(54) **APPARATUS FOR THE THERMAL TREATMENT OF FOOD PRODUCTS**

(30) Priority: 19.06.2019 IT 201900009492
(71) Applicant: ING. POLIN & C. S.p.A., 37135 Verona (IT)
(72) Inventor: COMETTI, Cesare, 37135 VERONA (IT)
(74) Representative: Lissandrini, Marco

(57) **Abstract**

An apparatus (1) for the thermal treatment of food products, comprises a chamber (2) which can be opened and defining a containment volume (V) for food products, temperature adjustment members (5) to set a predetermined temperature inside the containment volume (V), and humidification members (6) to generate a predetermined degree of humidity inside the containment volume (V). In detail, the humidification members (6) comprise a magnetic generator (10) adapted to generate a magnetic field with variable intensity, and a container (11) adapted to contain an evaporable liquid. In particular, the container (11) has inductive characteristics to interact with the magnetic field in order to dissipate heat, adapted to heat the evaporable liquid to generate steam. The container (11) is arranged in fluid connection with the containment volume (V) to allow the diffusion of the steam in the chamber (2).

## Description

### Technical Field

The present invention is applied to the food industry.

In particular, the present invention relates to an apparatus for the thermal treatment of food products capable of adjusting temperature and humidity.

### Prior Art

Currently, mainly in the bakery and pastry sector, it is known to use specific apparatuses that allow to adjust and control the temperature and humidity of the air inside the chamber containing the products to be treated, such as proofing or retarding cabinets.

These apparatuses, thanks to the temperature and humidity control, are able to accelerate or slow the fermentation of the doughs and, consequently, are able to manage and optimise the times necessary for baking, which can therefore only be performed during the daytime hours, reducing the amount of night work of the sector operators.

To date, the aforementioned proofing or retarding cabinets have substantially three different techniques for adjusting the hygrometric degree, that is, the humidity level, of their internal environment.

A first technique involves boiling a specific amount of water through the use of an electrical resistor.

However, this solution results in the formation of limestone deposits on the resistor, which cause a decrease in the thermal exchange and an increase in the possibility of breakage of the humidifier device. For these reasons, the average efficiency of the humidifier device is about 65%.

A possible solution to overcome these problems involves the use of demineralised water. However, this solution leads to an increase in production costs, as it is necessary to obtain this demineralised water or possibly install softener devices on the water mains.

A second known technique involves the use of a high-pressure pump and atomiser nozzles to atomise a specific pre-set amount of water.

Like with the previous solution, demineralised water should be used instead of mains water, to avoid possible limestone deposits and clogs of the nozzles. In this case, moreover, the efficiency is around 60%, as the enthalpy of the atomised water requires the installation of an additional heating system capable of further heating the air which has been humidified inside the proofing or retarding cabinet.

Finally, a third technique currently in use involves boiling a specific amount of water by immersing high-conductivity plates in the interior thereof.

The latter known technique, however, requires the use of water with conductivity greater than 500 µs/cm for a better propagation of the electricity produced between the plates, which, however, creates the formation of limestone deposits, resulting in a reduction in the maximum efficiency of the device to values of approximately 70%. Furthermore, disadvantageously, it is necessary to frequently replace the high-conductivity plates. Documents US6008482 and US5525782 describe further hygrometric degree adjustment techniques applied to ovens for cooking food, preferably microwave ovens, in which the steam produced results in supersaturation levels in the cooking chamber and in which the temperatures of the cooking chamber are generally above 100°C for cooking at high temperatures.

### Summary

In this context, the technical task of the present invention is to propose an apparatus for the thermal treatment of food products which obviates the drawbacks of the known art as mentioned above.

In particular, the present invention intends to provide an apparatus capable of using any type of water, demineralised and not (e.g., mains water), for the formation of water vapour.

In addition, an object of the present invention is to provide an apparatus capable of ensuring high efficiency during the production of water vapour necessary for the treatment of food products.

Another object of the invention is to provide an apparatus having low production and maintenance costs.

A further object of the present invention is to provide an apparatus for the thermal treatment of food products capable of operating even under "extreme" climatic conditions, i.e., at temperatures between 45° and 50° Celsius and at humidity close to values of 100%.

The stated technical task and the specified objects are substantially achieved by an apparatus for the thermal treatment of food products, which comprises the technical features disclosed in the independent claim. The dependent claims correspond to further advantageous aspects of the invention.

The invention relates to an apparatus for the thermal treatment of food products, which comprises a chamber which can be opened and capable of defining a containment volume in which food products can be positioned. For example, the chamber and the relative containment volume can define a proofing or retarding cabinet.

The apparatus further comprises temperature adjustment members configured to set a predetermined temperature inside the containment volume and humidification members configured to generate a predetermined degree of humidity inside the containment volume. Specifically, the humidification members comprise a container for an evaporable liquid and a magnetic generator adapted to generate a magnetic field with variable intensity and with the direction of the magnetic flows generated also variable. In particular, the container has inductive characteristics that enable it to interact with the aforementioned magnetic field, in such a way as to dissipate heat which is used to heat the evaporable liquid and thereby obtain a generation of steam. The container is arranged in fluid connection with the containment volume, for example directly or through interception members such as valves, to allow the diffusion of the steam therein and therefore inside the chamber which contains food products to be treated.

Advantageously, the steam produced by the humidification members passes through at least the temperature adjustment members before being conveyed into the containment volume. In fact, the temperature adjustment members are configured to cool or heat the same steam depending on the predetermined temperature at which the containment volume must be stabilised for the correct thermal treatment of food products.

In other words, the steam is thermally treated by the temperature adjustment members before being conveyed into the containment volume so that the temperature thereof is regulated in accordance with the predetermined temperature to set inside the containment volume. Advantageously, the preventive adjustment of the temperature of the steam allows, with the introduction thereof into the containment volume, to vary precisely and in a controlled manner the temperature inside the containment volume and, therefore, the temperature for the treatment of food products. In other words, the humidification members comprise a magnetic field generator and a container filled, even just partially, with an evaporable liquid, such as mains water. The container is made such that the variable magnetic field produced by the generator forms parasitic currents inside the container itself, which overheat it by Joule effect. Consequently, the heat thus produced is transferred to the liquid inside the container, which raises the temperature thereof up to the point of evaporation, producing steam useful for the treatment of food products contained in the chamber. According to one aspect of the invention, the temperature adjustment members are configured to adjust a temperature of the steam produced to a minimum value of 0 °C, a maximum value of 105 °C or any intermediate value. Preferably, the temperature of the steam produced is between 40 °C and 70 °C.

In this way, the steam produced is advantageously capable of varying the temperature inside the containment volume between a minimum value of about 0 °C and a maximum value of about 45 °C.

According to another aspect of the invention, the container is configured to contain the evaporable liquid at atmospheric pressure, preferably at a pressure value of about 101.3 kPa (i.e., 1.013 bar, or 1 atmosphere). According to an embodiment of the invention, the container is entirely made of inductive materials capable of interacting with the magnetic field such that the entire container develops the heat necessary to bring the contained liquid to the evaporation temperature.

Advantageously, the container made entirely of an inductive material has a low economic impact, as it is easily produced and easily replaceable in case of maintenance.

According to another embodiment of the invention, the container comprises a magnetically inert portion and an inductive portion adapted to interact with the magnetic field.

In this case, the container is made as a body, in which one part thereof has magnetic characteristics to interact with the variable magnetic field produced by the generator, while another part thereof has diamagnetic characteristics, i.e., inert with respect to the same variable magnetic field produced. In other words, the container is defined by both an inductive material and a material inert to the magnetic field so as to contain the evaporable liquid and, at the same time, interact with the variable magnetic field. Consequently, the inductive portion of the container interacting with the magnetic field is heated to generate the heat necessary to raise the temperature of the evaporable liquid beyond the evaporation point and generate the steam necessary for the treatment of food products. According to a further embodiment of the invention, the container comprises a receptacle and at least one inductive element housed inside the receptacle. In this way, the receptacle defines a magnetically inert portion adapted to contain the evaporable liquid, while the inductive element defines an inductive portion adapted to interact with the magnetic field.

Advantageously, the use of a container comprising a receptacle inert to the magnetic field and a separate inductive element capable of interacting with the magnetic field simplifies the maintenance operations of the apparatus and specifically of the humidification members. In addition, such a container is advantageously economical both from a production and maintenance point of view, as the components are easily replaceable, also independently of one another.

In this case, in fact, the only inductive element, which is simply arranged inside the container, requires replacement occasionally and without the intervention of specialised labour. The receptacle in inert material, on the other hand, does not require a particular maintenance procedure, but only a periodic cleaning.

According to one aspect of the invention, the magnetically inert portion of the container is made of a diamagnetic material, preferably a polymeric material or aluminium.

Advantageously, the use of a polymeric material for obtaining the magnetically inert portion of the container, and thus either a portion thereof or the entire receptacle, provides a container resistant at least to the high temperatures at which the evaporable liquid is induced. In addition, the container is thus able to prevent the dispersion of polymeric molecules inside the evaporable liquid and consequently in the steam, not allowing the deposit thereof on food products.

Even more advantageously, the container thus provided requires minimal periodic maintenance for the removal of any limestone residues, for example due to the use of non-demineralised water, easily executable thanks to the natural flexibility of the polymeric material that forms the container. In other words, a container consisting at least in part of a polymeric material is physically manipulable in a simple and effective manner in order to eliminate limestone deposits.

According to another aspect of the invention, the inductive portion is made of a ferromagnetic material.

Advantageously, making the inductive portion of the container or the inductive element with a ferromagnetic material simplifies the availability of the components necessary for the assembly of the humidification members and reduces the overall cost thereof. These materials are in fact available simply on the market and at reduced costs.

Preferably, the inductive portion comprises at least one plate made of ferromagnetic material.

Advantageously, the use of a plate made of metallic and ferromagnetic material, such as iron or mild steel, reduces production costs and simplifies the maintenance to which the apparatus must be subjected from time to time. In this case, in fact, it is sufficient to periodically replace the ferromagnetic iron or mild steel plate, which is easily available on the market and at low cost. All this, therefore, does not require the intervention of specialised labour, with a further reduction in maintenance costs. According to a further aspect of the invention, the apparatus for the thermal treatment of food products comprises a humidity sensor associated with the chamber for detecting a humidity value inside the containment volume. The humidity sensor is connected to a control unit and the humidification members. In particular, the control unit is configured to vary the intensity of the magnetic field according to the humidity value detected by the humidity sensor. In this way, the control unit is able to control the production of steam useful for the treatment of food products. In practice, the control unit is configured to increase or decrease the intensity of the variable magnetic field, if the humidity value recorded by the humidity sensor is, respectively, lower or higher than a pre-set humidity limit value.

Preferably, the container has an opening for loading a predetermined volume of evaporable liquid therein, preferably water. In detail, when the apparatus is in use, the opening is placed directly in connection with the water mains, preferably the interception of the flow takes place through service members, such as valves.

Advantageously, therefore, the apparatus is able to maintain the water supply constant and is thus able to avoid a sudden reduction and/or interruption of the production of water vapour essential for the treatment of food products.

According to one aspect of the invention, the apparatus comprises at least one fan for moving the air and the steam present inside the containment volume.

### Brief description of the drawings

Further characteristics and advantages of the present invention will become more apparent from the indicative, and thus non-limiting, description of a preferred, but not exclusive, embodiment of an apparatus for the thermal treatment of food products, as illustrated in the accompanying drawings, in which:
- figure 1 illustrates a perspective view of a first embodiment of the apparatus for the thermal treatment of food products;
- figure 2 illustrates a perspective view of a second embodiment of the apparatus for the thermal treatment of food products;
- figure 3 illustrates a lateral view of an enlargement of the apparatus shown in figure 1;
- figure 4 illustrates a lateral view of an enlargement of the apparatus shown in figure 2;
- figure 5 illustrates a perspective exploded view of the humidification members of the apparatus for the thermal treatment of food products;
- figure 6 illustrates a perspective view of the container of the humidification members shown in figure 5.

With reference to the drawings, they serve solely to illustrate embodiments of the invention with the aim of better clarifying, in combination with the description, the inventive principles underlying the invention.

### Detailed description

The present invention relates to an apparatus for the thermal treatment of food products.

With reference to the figures, an apparatus for the thermal treatment of food products has been generically indicated with the number 1.

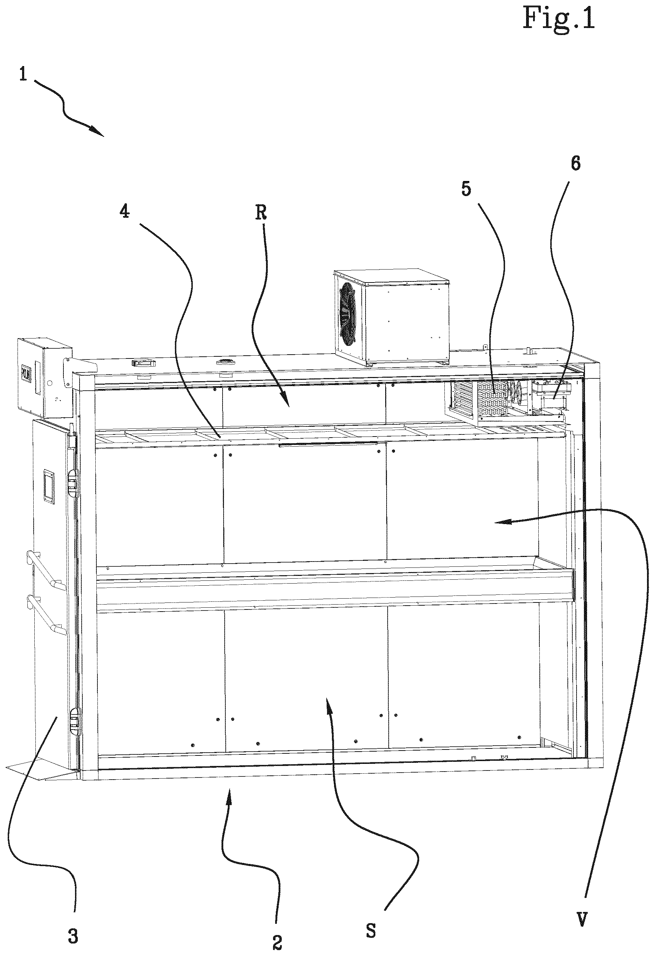

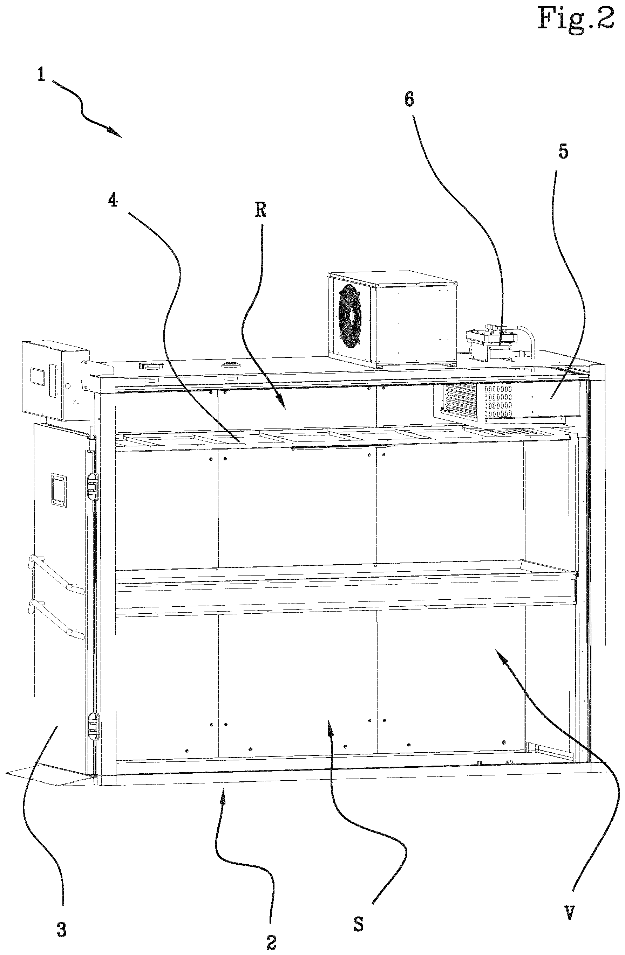

Figures 1, 2 show two possible embodiments of an apparatus 1 for the thermal treatment of food products.

An apparatus 1 for the thermal treatment of food products comprises a chamber 2 configured for defining a containment volume V for food products. Inside the chamber 2, in fact, a plurality of trays can be inserted on which food products to be thermally treated can be placed. Therefore, while remaining sealed with respect to the external environment, the chamber 2 is advantageously able to maintain a controlled atmosphere inside. In addition, to allow the insertion of the plurality of trays, the chamber 2 can be opened by using a special door 3 arranged in front at an access opening to the chamber substantially having the same surface extension as the door 3 itself.

Advantageously, the door 3 is at least provided with a transparent portion to allow an operator to inspect the interior of the chamber 2 during the operation of the apparatus 1.

A bulkhead 4 is present inside the chamber 2, configured to divide the containment volume V between a recirculation volume R and a storage volume S, extending below the recirculation volume R. The bulkhead 4 is substantially a grate or a panel having openings to allow the mutual diffusion of a fluid between the recirculation volume R and the storage volume S, for example the diffusion of steam from the recirculation volume R to the storage volume S.

Preferably, the apparatus 1 comprises temperature adjustment members 5 to impose a predetermined temperature inside the containment volume V and humidification members 6 to generate a predetermined degree of humidity inside the containment volume V.

The humidification members 6 can be assembled as a single piece or, alternatively, in two or more parts located spaced apart and connected directly or indirectly to one another.

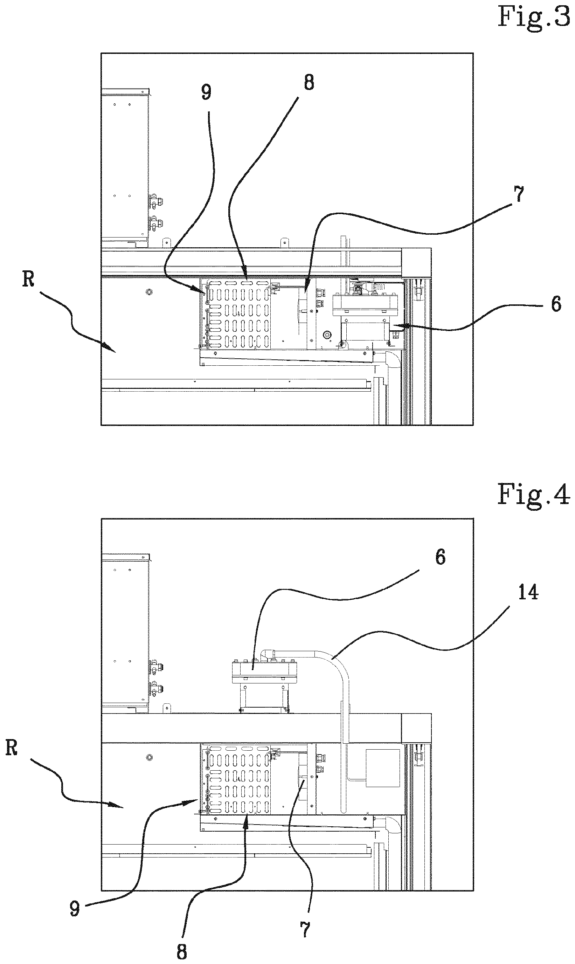

According to a first aspect of the invention illustrated in figure 1 (and in more detail in figure 3), the temperature adjustment members 5 and the humidification members 6 are positioned in the recirculation volume R, arranged on the bulkhead 4 and spaced apart with respect to the door 3 of the chamber 2.

Alternatively, in accordance with a second aspect of the invention illustrated in figure 2 (and in more detail in figure 4), the temperature adjustment members 5 are positioned in the recirculating volume R, substantially arranged on the bulkhead 4 and spaced apart from the door 3 of the chamber 2, while the humidification members 6 are arranged outside the chamber 2, more precisely above the apparatus 1 on the ceiling of the same chamber 2.

According to a further aspect of the invention, the humidification members 6 (when assembled in several separate parts) can be arranged in the apparatus 1 so that each of the various components is arranged in a relative secure environment in which the risk of damage is significantly reduced and any access for an operator to perform a maintenance and/or control operation is greatly simplified. In other words, the components are positioned in different places from one another, but are kept connected so as to ensure the production of the necessary steam and its channelling inside the apparatus 1.

According to one aspect of the invention, the steam produced by the humidification members 6 passes through at least the temperature adjustment members 5 before being conveyed into the containment volume V. The temperature adjustment members 5, in fact, are configured to cool or heat the same steam depending on the predetermined temperature at which the containment volume V must be stabilised for the correct thermal treatment of food products.

In this way, the steam produced is advantageously thermally treated (i.e. heated or cooled) by the temperature adjustment members 5 to be introduced into the containment volume V, where the food products to be treated are present, at a temperature useful to aid in reaching the predetermined temperature of the chamber 2.

In other words, the steam is produced by the humidification members 6 at a first operating temperature and then thermally treated (by heating or cooling) at a second operating temperature by the thermal treatment members 5.

Preferably, the second operating temperature coincides or is near, or is nevertheless correlated to the predetermined temperature reached by the containment volume V in which the food products to be treated are present. In this way, the steam produced is able to aid the temperature adjustment members 5 to reach the predetermined temperature in the chamber 2 and, at the same time, determine a predetermined humidity level inside the containment volume V for the correct treatment of food products. Preferably, the apparatus 1 comprises at least one fan 7 configured to move the air and steam present inside the containment volume V. More precisely, the fan 7 is arranged in the recirculation volume R and is configured to convey the steam produced by the humidification members 6 into the storage volume S through the bulkheads 4 and the temperature adjustment members 5, so that the latter are able to cool or heat the steam depending on the type of thermal treatment to be performed on the food products. In fact, the apparatus 1 can be configured to thermally treat food products between a minimum temperature of -15 °C and a maximum temperature of + 45 °C. In other words, the fan 7 conveying the generated steam is interposed between the humidification members 6 and the temperature adjustment members 5.

As long as the apparatus 1 is configured to thermally treat food products at temperatures below 0 °C, for example between -15 °C and about 0 °C, the humidification members 6 are kept off because, at such temperatures, the steam produced would condense in the form of frost. Thus, in such a range, the temperature rise is achieved by activating the temperature adjustment members 5.

When the apparatus 1 is configured to thermally treat food products at temperatures greater than 0 °C, preferably greater than +5 °C, the humidification members 6 are configured to produce the steam necessary to raise the temperature of the containment volume V of the apparatus 1. Preferably, the temperature adjustment members 5 are configured to vary the temperature of the steam produced between a minimum value of 0 °C and a maximum value of +105 °C. Preferably, the temperature adjustment members 5 are configured to vary the temperature of the steam between +40 °C and +70 °C.

Consequently, the introduction of thermally treated steam at the second operating temperature allows the temperature of the containment volume V to be raised through the thermodynamic equilibrium established between the conveyed steam and the environment inside the chamber 2. More precisely, the temperature inside the containment volume V is thus raised between 0 °C and +45 °C until it reaches the predetermined temperature for the correct treatment of food products.

According to an aspect of the invention better visible in figures 3 and 4, the temperature adjustment members 5 comprise a heat exchanger 8, preferably a finned pack, and a set of resistors 9. The heat exchanger is configured to cool the steam to be conveyed into the storage volume S, while the set of resistors 9 is configured to heat the steam.

Preferably, the temperature adjustment members 5 comprise a temperature sensor (not shown) configured to detect an internal temperature value of the chamber 2 and thereby activate the operation of the heat exchanger 8 or the set of resistors 9, to cool or heat the generated steam according to the internal temperature value detected.

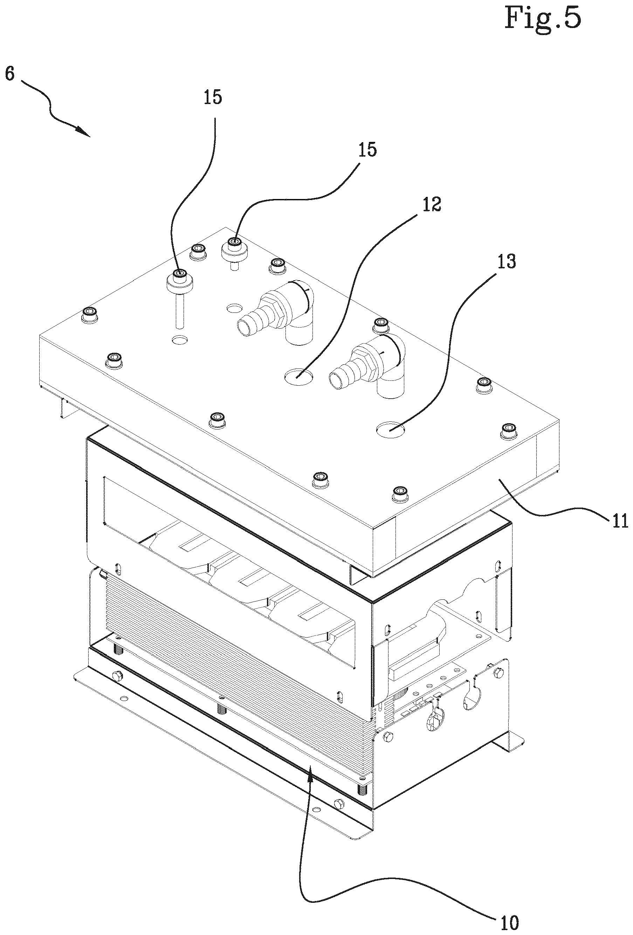

According to an aspect of the invention shown in figure 5, the humidification members 6 comprise a magnetic generator 10 adapted to generate a magnetic field with variable intensity, and a container 11 adapted to contain an evaporable liquid, preferably water.

Even more in detail, the container 11 has inductive characteristics which allow the establishment of an interaction with the magnetic field produced by the magnetic generator 10. In this way, the amount of heat dissipated from the container 11 is sufficient to heat the evaporable liquid up to the boiling temperature so as to generate the steam to be conveyed into the storage volume S.

Preferably, the container 11 comprises an outlet opening 12 such as to place the interior of the container 11 in fluid communication with the containment volume V and, consequently, to allow the diffusion of the generated steam into the chamber 2.

Advantageously, the diffusion of the steam outside the container 11 is ensured by the overpressure condition which is established inside the container 11 itself as a result of the evaporation of the liquid itself, and therefore the volumetric expansion thereof.

According to a preferred aspect of the invention, the container 11 is configured to contain the evaporable liquid at atmospheric pressure, preferably at a pressure value of about 101.3 kPa (i.e., 1.013 bar, or 1 atmosphere).

According to an aspect of the invention, the container 11 comprises an inlet opening 13 to which a connecting conduit 14 is connected configured to place in direct fluid communication a water mains (or in general with a source of an evaporable liquid) with the aforementioned inlet opening 13. In this way, as long as the apparatus 1 is in use, the connecting conduit 14 allows loading a predetermined volume of evaporable liquid inside the container 11 and keeping the level of such evaporable liquid in the aforementioned container 11 substantially unchanged.

Preferably, the container 11 comprises a pair of level probes 15 configured to record the variation of the level of the evaporable liquid inside the container 11 itself between a minimum level and a maximum level so as to enable or disable the supply of evaporable liquid through the inlet opening 13.

According to an aspect of the invention, the container 11 comprises a magnetically inert portion and an inductive portion, the latter adapted to interact with the magnetic field generated by the magnetic generator 10.

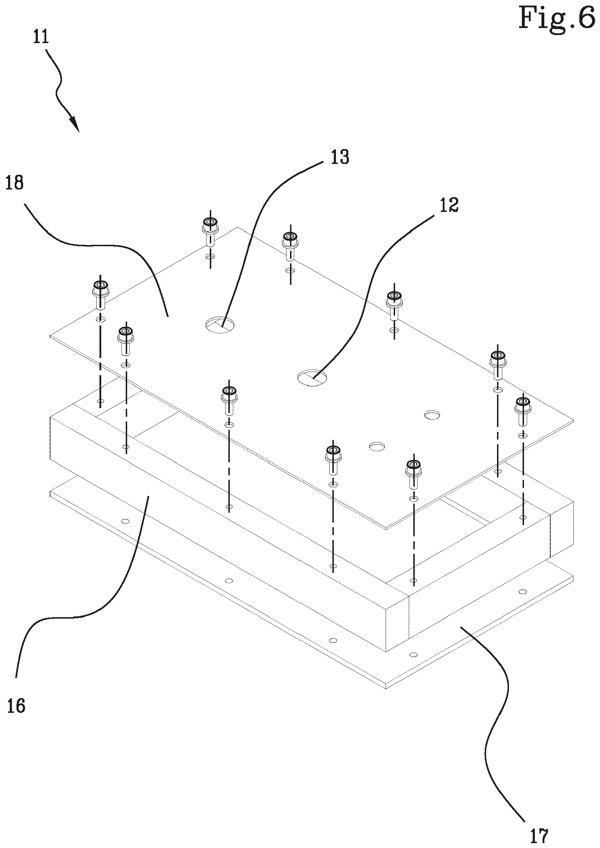

Figure 6 illustrates a first embodiment of the invention, in which the container 11 consists of side walls 16 made of diamagnetic material, preferably aluminium, a bottom 17 made of ferromagnetic material, preferably steel or iron, and a cover plate 18.

As best seen in figure 5, the container 11 can be positioned above the magnetic generator 10 so that the bottom 17 is constrained to a support frame and, at the same time, faces the same magnetic generator 10 so as to interact with the emitted field lines to heat up and bring the evaporable liquid to a boil.

Preferably, the cover plate 18 is made of the same material as the bottom 17, so that both, heating up due to the interaction with the magnetic field, dilate equally without causing distortions of the container 11 resulting in the formation of leakage cracks of the evaporable liquid and/or the steam contained.

According to one aspect of the invention, the inlet opening 13, the outlet opening 12 and the openings for positioning the level probes 15 are obtained on the cover plate 18.

According to a different embodiment of the invention (not shown), the container 11 comprises a receptacle shaped to contain the evaporable liquid, and at least one inductive element also housable in the same receptacle. In this way, the receptacle defines a magnetically inert portion of the container 11, while the inductive element defines an inductive portion adapted to interact with the magnetic field.

Preferably, the magnetically inert portion, or in the specific case the receptacle, can be made with a polymeric material, preferably silicone, capable of not interacting with the magnetic field produced.

Even more preferably, at least according to the present embodiment, the inductive portion of the container is made of a ferromagnetic material. According to one aspect of the invention, the inductive portion comprises at least one plate made of ferromagnetic material, preferably iron or steel. Advantageously, the receptacle is able to contain the evaporable liquid and the ferromagnetic plate, while the latter, interacting with the magnetic field, heats up, dissipating heat which raises the temperature of the evaporable liquid until evaporation. If the evaporable liquid is simple non-distilled water, limestone deposits may form inside the container and on the plate, reducing the efficiency thereof as a heating element.

Advantageously, the ferromagnetic plate, being made of common materials such as iron or steel and simply positioned inside the receptacle, allows it to be easily replaced at low cost. In addition, the receptacle in silicone material is easily cleanable from limestone deposits for subsequent reuse. Therefore, the labour for this component has minimal impact on the total costs of the apparatus 1.

According to a preferred aspect of the invention, the apparatus 1 comprises a humidity sensor, which is associated with the chamber 2 and is configured to detect a humidity value inside the containment volume V, and a control unit connected to the humidity sensor, the humidification members 6 and the level probes 15.

The control unit is configured to vary the intensity of the magnetic field based on the humidity value detected by the humidity sensor, so as to raise or lower the humidity value inside the chamber 2 with respect to a pre-set humidity limit value.

A lowering or raising of the humidity value detected corresponds to a lowering or raising of the intensity of the magnetic field generated, which consequently corresponds to a lowering or raising of the steam produced. For example, if the pre-set humidity limit value to be reached is 80% and the humidity sensor detects a value of 60%, the control unit is configured to activate the humidification members 6 at maximum power until a humidity value of 70% detected by said humidity sensor is reached. In other words, as long as the difference between the detected humidity value and the pre-set limit value is greater than 10%, the humidification members 6 are configured to generate the maximum magnetic field possible to operate at their maximum power.

When a humidity value of 70% is reached (i.e., when the humidity sensor detects that the humidity difference is equal to or less than 10%), the magnetic field strength is reduced by the control unit so that the humidity value can be adjusted more slowly but in a more controlled manner. For example, when the difference between the detected humidity value and the pre-set humidity value is about 3%, the control unit is configured to adjust the humidification members 6 to about 10% of the maximum working power. According to a further application example of the invention, if the relative humidity value inside chamber 2 is equal to about 80%, low amounts of water in the form of steam are present in the containment volume V. For example, the amount of water is about 20 grams/kg at a temperature of 20 °C, or it is about 26 grams/kg at a temperature of 30 °C.

It follows that the apparatus 1 is able to operate with a high activation and deactivation speed since the amount of steam to be introduced into the containment volume V is low. Advantageously, the apparatus 1 has very low thermal inertia values, as the starting time interval for reaching the desired temperature in the containment volume V is variable between 5 seconds and 10 seconds in order to avoid delays in humidification. Likewise, the deactivation time interval is less than about 3 seconds in order to avoid the formation of excess humidity inside the containment volume V and exceeding the predetermined temperature.

Preferably, the control unit is configured to deactivate the humidification members 6 when the value of the temperature and/or humidity inside the containment volume V is slightly lower than the respective predetermined temperature and/or humidity values, for example 5%-10% or less. Preferably, the control unit is connected to a flow adjustment valve interposed between the evaporable liquid source and the inlet opening 13. The control unit is thus configured to adjust the operation of said control valve based on the control signal sent by the level probes 15 and representative of the evaporable liquid level inside the container 11.

Even more preferably, the control unit is connected with the temperature adjustment members 5 and is configured to alternately activate or deactivate the heat exchanger 8 or the set of resistors 9 based on the temperature value inside the chamber recorded and sent by the temperature sensor.

The present invention also relates to a retarding cabinet comprising the apparatus 1 described above and in which the temperature of the containment volume V is between -15 °C and +45 °C and the degree of humidity inside the containment volume V is between 20% and 100%.

## Claims

1. An apparatus (1) for the thermal treatment of food products, comprising:
- a chamber (2) which can be opened and defining a containment volume (V) for food products;
- temperature adjustment members (5) to set a predetermined temperature inside said containment volume (V);
- humidification members (6) for generating a predetermined degree of humidity inside said containment volume (V),
**characterised in that** said humidification members (6) comprise:
- a magnetic generator (10) adapted to generate a magnetic field with variable intensity;
- a container (11) adapted to contain an evaporable liquid, said container (11) having inductive characteristics to interact with the magnetic field in order to dissipate heat, adapted to heat said evaporable liquid to generate steam, said container (11) being arranged in fluid connection with said containment volume (V) to allow the diffusion of said steam in the chamber (2),
wherein said steam produced by said humidification members (6) passes through at least the temperature adjustment members (5) to be cooled or heated according to the predetermined temperature of the containment volume (V) set by said temperature adjustment members (5), said steam passing through the temperature adjustment members before being diffused in said chamber (2).

2. The apparatus (1) according to claim 1, wherein said temperature adjustment members (5) are configured to set a temperature of the steam produced between a minimum value of 0 °C and a maximum value of 105 °C.

3. The apparatus (1) according to any one of the preceding claims, wherein said container (11) is configured to contain said evaporable liquid at atmospheric pressure, preferably at a pressure value equal to about 1.013 bar or 101.3 kPa.

4. The apparatus (1) according to any one of the preceding claims, wherein said container (11) is made entirely of inductive materials, preferably ferromagnetic materials, capable of interacting with said magnetic field.

5. The apparatus (1) according to any one of the preceding claims 1 to 3, wherein said container (11) comprises a magnetically inert portion and an inductive portion adapted to interact with said magnetic field.

6. The apparatus (1) according to any one of the preceding claims 1 to 3, wherein said container (11) comprises a receptacle and at least one inductive element housed in said receptacle; said receptacle defining a magnetically inert portion of the container (11) adapted to contain said evaporable liquid; said inductive element defining an inductive portion adapted to interact with said magnetic field.

7. The apparatus (1) according to claim 5 or 6, wherein said magnetically inert portion is made of a diamagnetic material, preferably a polymeric material or aluminium.

8. The apparatus (1) according to any one of claims 5 to 7, wherein said inductive portion is made of a ferromagnetic material.

9. The apparatus (1) according to any one of claims 5 to 7, wherein said inductive portion comprises at least one plate made of ferromagnetic material.

10. The apparatus (1) according to any one of the preceding claims, comprising:
- a humidity sensor associated with said chamber (2) for detecting a humidity value inside said containment volume (V);
- a control unit connected to said humidity sensor and to said humidification members (6); said control unit being configured to vary the intensity of said magnetic field according to said humidity value detected by said humidity sensor, whereby a lowering/raising of the humidity value detected with respect to a humidity limit value corresponds to a lowering/raising of the intensity of the magnetic field generated, which corresponds to a lowering/raising of the steam produced.

11. The apparatus (1) according to any one of the preceding claims, wherein said container (11) has an inlet opening (13) for loading a predetermined volume of the evaporable liquid in its interior; said opening (13) being placed in direct fluid connection with a water mains, when said apparatus (1) is in use.

12. The apparatus (1) according to any one of the preceding claims, comprising at least one fan (7) for moving the air and the steam present inside the containment volume (V).

13. A retarder cabinet comprising an apparatus (1) according to any one of the preceding claims, wherein the temperature of the containment volume (V) is between -15 °C and +45 °C, and the degree of humidity inside the containment volume (V) is between 20% and 100%.
